# EUROPEAN PATENT SPECIFICATION

(11) **EP 3 187 948 B1**
(45) Date of publication and mention of the grant of the patent: **06.03.2019**
(21) Application number: 16305001.6
(22) Date of filing: 04.01.2016
(51) Int. Cl.: G05B 19/418, G05B 19/05, G06Q 10/06, G05B 23/02

(54) **SYSTEM AND METHOD FOR MANAGING PRODUCT QUALITY IN CONTAINER PROCESSING PLANTS**
SYSTEM UND VERFAHREN ZUR VERWALTUNG DER PRODUKTQUALITÄT IN BEHÄLTERVERARBEITUNGSANLAGEN
SYSTÈME ET PROCÉDÉ DE GESTION DE LA QUALITÉ DU PRODUIT DANS DES INSTALLATIONS DE TRAITEMENT DE RÉCIPIENTS

(43) Date of publication of application: 05.07.2017
(73) Proprietor: SIDEL PARTICIPATIONS, S.A.S., 76930 Octeville-sur-Mer (FR)
(72) Inventor: MONTANARI, Michele, 43126 Parma (IT)
(74) Representative: Sidel Group

(56) References cited:
- EP-A1- 1 909 155
- US-A1- 2006 271 226
- US-A1- 2008 015 725
- US-A1- 2015 346 706

## Description

The present invention relates to a system and method for managing product quality in container processing plants, in particular being designed to fill containers with a pourable product.

In general, the present solution may be used in machines for processing any type of containers, such as containers or bottles made of glass, plastics (PET), aluminum, steel and composites, and with any type of pourable products filled in the containers, including carbonated liquids, such as sparkling water, soft drinks, beer; non-carbonated liquids, such as still water, juices, teas, sport drinks, wine; liquid cleaners, emulsions, suspensions, or high viscosity liquids.

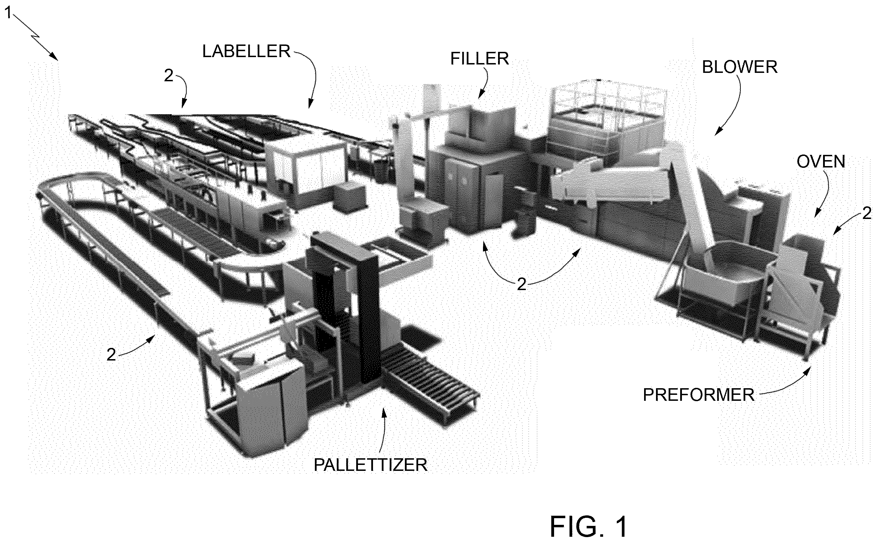

As schematically shown in Figure 1, a known container processing plant 1 includes a number of processing machines 2, among which:
a preformer, designed to generate so-called preform of containers, e.g. plastic or glass bottles;
an oven, designed to heat the preform containers received from the preformer;
a blower, designed to blow the heated perform containers received from the oven in fully shaped containers;
a filler, designed to fill the formed containers received from the blower, with a desired pourable product, e.g. a still or carbonated liquid, and close the filled containers with a cap;
a labeler, designed to label the filled containers received from the filler;
a palletizer, designed to receive the labelled and filled containers from the labeler and to form organized pallets, ready for shipping and marketing.

In general, each processing machine 2 comprises: a feed line for receiving a succession of containers to be processed; a processing line, typically comprising a rotating conveyor (so called "carousel"), carrying a number of processing units, each designed to perform processing operations on a respective container, the processing units mounted to rotate continuously about a longitudinal axis, carried by the carousel; and an output line, to transfer the processed containers towards a next-in-line processing machine 2 in the container processing plant 1. Generally, containers are transferred between the various parts of the processing machine via transfer wheels or conveyors.

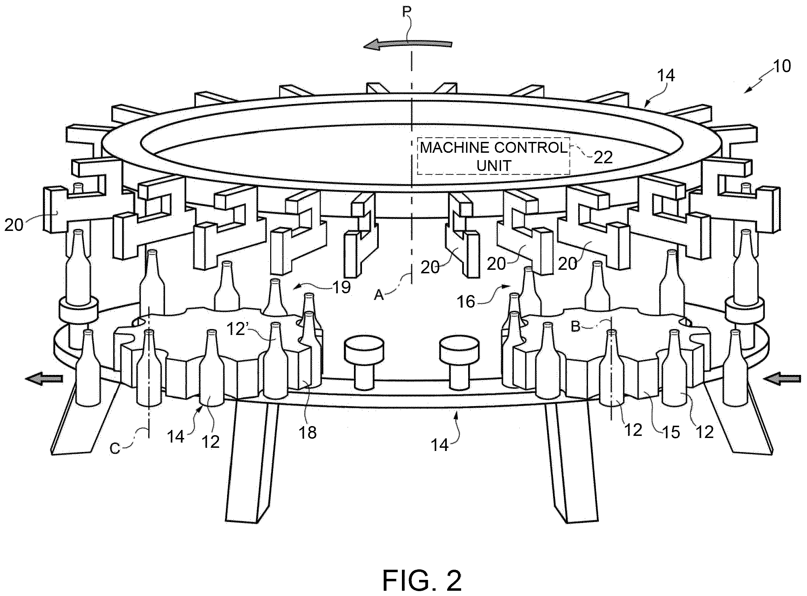

By way of example, Figure 2 schematically shows a filling machine (or filler) 10 of the container processing plant 1, configured for filling containers 12, for example glass bottles, with a filling fluid, for example a carbonated pourable food product (but it is again underlined that other types of containers and carbonated, or non-carbonated, liquids may as well be envisaged).

Filling machine 10 comprises a conveying device, including a rotating conveyor (or carousel) 14, which is mounted to rotate continuously (anticlockwise in Figure 1) about a substantially vertical longitudinal axis A.

The rotating conveyor 14 receives a succession of empty containers 12 (e.g. originating from the blower in the same processing plant 1) from an input wheel 15, which is coupled thereto at a first transfer station 16 and is mounted to rotate continuously about a respective vertical longitudinal axis B, parallel to axis A.

The rotating conveyor 14 releases a succession of filled containers 12 to an output wheel 18 (e.g. so as to be received by a labeling machine and/or a capping machine of the processing plant), which is coupled thereto at a second transfer station 19 and is mounted to rotate continuously about a respective vertical longitudinal axis C, parallel to axes A and B.

Filling machine 10 comprises a number of filling units 20, which are equally spaced about axis A, are mounted along a peripheral edge of rotating conveyor 14, and are moved by the same rotating conveyor 14 along a path P extending about axis A and through transfer stations 16 and 19.

Each filling unit 20 is designed to receive at least one container 12 to be filled, and to perform, during its rotation along path P, filling operations according to a filling "recipe", in order to fill the container with a fluid (e.g. a carbonated liquid); the recipe may include steps of pressurization or depressurization of the container, opening/closing of valves, displacement of movable elements, activation of actuators and so on.

Each filling unit 20 generally includes one or more fluidic conduits and flow regulators (here not shown), including valves that are designed to selectively couple the container to one or more feed devices, or product tanks (also not shown), of the filling machine 10.

In a manner not shown in detail, each filling unit 10 includes a main body, for example with a tubular configuration, having a vertical extension along a longitudinal axis that is substantially parallel to axis A of rotating conveyor 14, and mechanically coupled to the rotating conveyor 14. The main body includes, at a bottom portion thereof, a container receiving part, designed to releasably engage a neck 12' of the container 12 that is to be filled during the filling operations.

Operation of the filling units 20 is controlled by a machine control unit 22 (shown schematically), generally including a PLC (Programmable Logic Controller) designed to control general operation of the filling machine 10, e.g. providing suitable control signals for the actuation of the flow regulators and the corresponding valves and actuators.

The Applicant has realized that managing the quality of the product, i.e. the filled container, in the container processing plant 1, and in particular maintaining a desired product quality during the operation of the container processing plant 1 may often prove to be a difficult task.

In particular, while sensors and other electric/electronic components are used on-site in the processing machines to evaluate their operation, generally these sensors and components are designed to monitor the operating status of the processing machines, i.e. faults of their constituent parts, with the aim of avoiding operating stops for maintenance and repairing.

The Applicant has realized a lack of solutions that allow automatic monitoring the quality of the product in the container processing plant, along the entire production line.

In particular, quality of the product is currently evaluated with inspection of samples during the processing operations. However, this kind of inspection does not provide direct and unambiguous insights on possible causes of a perceived decreased quality of the product.

Known from EP-101909155-A1 is an article management system having
- a previous process where management targets to be used as parts in a next process are manufactured as products and
- a next process where second products are manufactured by using the products manufactured in the first process where second products are manufactured by using the products manufactured in the previous process as parts,
wherein the previous process and the next process are successively connected to model a plurality of processes as a hierarchical structure.

The article management system of EP-101909155-A1 comprises
- a product data creation means which creates, for the management targets, product data corresponding to the products of the previous process,
- a part data creation means corresponding to parts in the next process and corresponding to the products,
- an identification assigning means which assigns virtual identification information to a plurality of management targets subjected to a process between a first time and a second time in at least one of the previous processes and the next process, and
- a management data creation means which creates management data formed of a single file by associating the product data, the part data, and the identification information with each other.

The aim of the present solution is consequently to solve, at least in part, the problems previously highlighted, and in general to provide improved managing of product quality in container processing plants.

According to the present solution, an automated system according to independent claim 1 is provided. Other advantageous embodiments are defined in dependent claims 2 to 5.

For a better understanding of the present invention, preferred embodiments thereof are now described, purely by way of non-limiting examples, with reference to the attached drawings, wherein:
- Figure 1 is a schematic view of a container processing plant;
- Figure 2 is a schematic representation of a filling machine in the container processing plant of Figure 1;
- Figure 3 is a diagrammatic representation of an automated system for managing product quality according to a first embodiment of the present solution;
- Figure 4 is a diagrammatic representation of a system according to a second embodiment of the present solution;
- Figure 5 shows a plot of a monitored parameter in a processing machine of the container processing plant;
- Figure 6a-6b show plots relating to monitoring operations performed in the monitoring system according to an aspect of the present solution;
- Figure 7 shows a plot of a different monitored parameter in a further processing machine of the container processing plant;
- Figure 8a-8b show plots relating to monitoring operations performed in the monitoring system according to a further aspect of the present solution; and
- Figure 9 is a flow chart of operations of an automated method for managing product quality, according to a still further aspect the present solution.

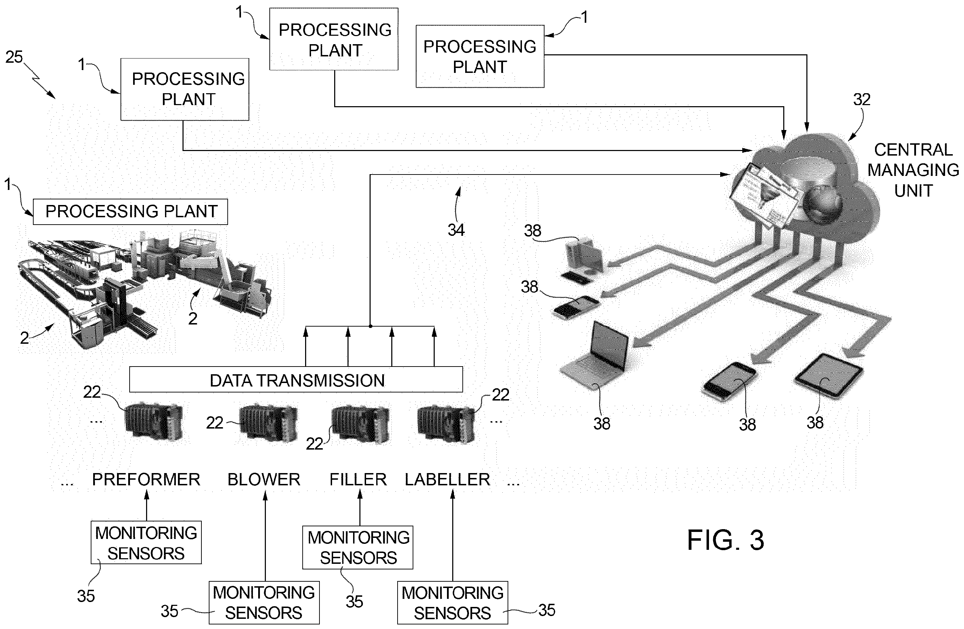

An automated intelligent system for managing product quality in a container processing plant (e.g. the container processing plant 1 discussed with reference to Figure 1) is shown in Figure 3, where is denoted as a whole with reference 25.

System 25 includes the machine control units 22 of the various processing machines 2 of the container processing plant 1, among which e.g. the preformer, oven, blower, filler, labeler, and palletizer.

Machine control units 22 are operatively coupled to a central managing unit 32, via a communication interface 34.

In particular, central managing unit 32 may conveniently be arranged remotely from the container processing plant 1, e.g. at the premises of the manufacturer of the processing machines 2 of the same container processing plant 1, or, advantageously, being provided as a cloud computing infrastructure; in this case, communication interface 34 includes a wireless link, e.g. via an internet or satellite communication.

As schematically shown in Figure 3, according to an aspect of the present solution, central managing unit 32 is operatively coupled to a plurality of container processing plants 1, which may be conveniently arranged in different areas, regions or countries.

Each machine control unit 22 in a respective container processing plant 1 is configured (i.e. being suitably programmed and designed) to receive in real time (i.e. during operation) a number of readings of operating data from monitoring sensors 35 coupled on-site (i.e. on-board the machine) to the various operating parts and components thereof, these operating data being indicative of the operations performed.

For example, in case of a filler, operating data acquired from these readings may relate to operation of the filling units 20, e.g. in terms of valve opening time, valve closing time and flow-rate.

Each machine control unit 22 is configured to execute a pre-analysis of the acquired data, in order to determine performance measurements, indicative of the performance of the operations performed in the related processing machine 2.

Before determining these performance measurements, machine control unit 22 may be configured to filter the acquired data, e.g. for removing possible spikes or disturbances (that may for example be present during start and stop operating phases of the processing machines 2), in order to avoid erroneous determination of the same performance measurements.

In particular, the performance measurements include the so called KPIs (Key Performance Indicators). In a known manner, here not discussed in detail, determination of KPIs involve statistical analysis of the acquired data, e.g. in terms of mean or average value and standard deviation thereof.

In the above example of a filler (as will be discussed in more details in the following), KPIs may relate to the filling times in the operation of the filling units 20 or the flow-rate of the liquid flowing through the same filling units 20.

Moreover, machine control unit 22 is further configured to execute a pre-analysis of the performance measurements, in particular the determined KPIs, and check if their value lies within a predetermined range of values, being indicative of a normal or proper operation of the related processing machine 2 (this predetermined range of value being e.g. defined by design or during a characterization procedure). For example, in case of a filler, a KPI related to the filling time is comprised in a predetermined range, in case of proper operation of filling units 20.

If the performance measurements are determined to fall outside the predetermined range (being affected by a so called "drift"), machine control unit 22 is configured to identify an "event" associated to the respective processing machine 2, being related to a possible decrease of performance and thus a possible cause of deterioration of product quality.

Upon detection of the event, the performance measurements are therefore caused to be stored for allowing further analysis and processing, and to be transmitted to the central managing unit 32, via the communication interface 34. It is thus underlined that the stored measurements represent only a subset of the whole measurements performed, and that the measurements executed during a normal operating condition are not stored (in other words, no use is made of a data-logger solution).

According to an aspect of the present solution, central managing unit 32 is configured (i.e. being suitably programmed and designed) to process the received performance measurements via a data-analysis engine, in order to manage the performance of the container processing plants 1, in terms of product quality and with the aim of maintaining a desired product quality.

According to an aspect of the present solution, data analysis engine operates in real-time on the performance measurements acquired from the various processing machines 2 in the container processing plants 1, particularly according to a so called "Big Data & Minor Data & Predictive modelling" solution.

In particular, central managing unit 32 is configured to analyse, with a self-decision engine, the performance measurements received from the various container processing plants 1 and processing machines 2 in isolation and in combination, in particular performing statistical and comparative analysis in relation to performance of the various processing machines 2 of a same container processing plant 1, and/or of various different container processing plants 1.

For example, if performance measurements relate to an event associated to a filler (e.g. due to a decrease of a flow rate in a related filling unit 20), central managing unit 32, in addition to checking the parameters of the relevant filling unit 20, may check the correct operation of a product tank of the same processing machine, which could be responsible for a decreased feeding of liquid to the same filling unit 20, or a blower in the same container processing plant 1, which could be responsible for a defect in the formation of the related container. Moreover, central managing unit 32 may check if corresponding anomalous readings are received from filling units 20 of fillers in other container processing plants 1, this being possibly caused e.g. by a batch of defective components delivered to the container processing plants 1.

In general, central managing unit 32, being operatively coupled to all processing machines 2 of a particular container processing plant 1 and to a plurality of container processing plants 1, is advantageously configured to relate the operation of a particular processing machine 2 with the other processing machines 2 of the same container processing plant 1 and of other, even remotely located, container processing plants 1. Comparing the processing machines 2 within a same container processing plant 1 or between different container processing plants 1 may allow to more easily identify the elements causing a decrease in the product quality.

Moreover, central managing unit 32 is configured to perform historical analysis of the received data, in order to check e.g. the evolution with time of an anomalous operation affecting a processing machine 2, and also to perform predictive analysis on the operation of the processing machines 2, aimed at predicting the future performance (e.g. drifts or trends) of the processing machine 2 based on the history of performance and the current performance measurements.

The result of the above data analysis performed by the central managing unit 32 is an action plan (or a so-called "to-do list"), including a list of actions designed to assure the desired product quality in the container processing plants 1, e.g. envisaging repair or replacement of one or more parts of the processing machines 2 that are determined to be a cause of decreased quality.

In particular, the action plan is conveniently transmitted to electronic computing devices 38 (shown schematically in Figure 3) of a managing operator, e.g. a maintenance or production manager, of processing plants 1, in order to allow timely execution of the list of actions envisaged by the same action plan and thereby maintaining the desired product quality during operation of the container processing plant 1.

As schematically shown in the same Figure 3, electronic computing devices 38 may include a personal computer (PC), a mobile device, such as a smartphone, a tablet or PDA (Personal Data Assistant) of the managing operator, displaying, in response to the data received from the central managing unit 32 suitable reports and plots, in association with the above action list.

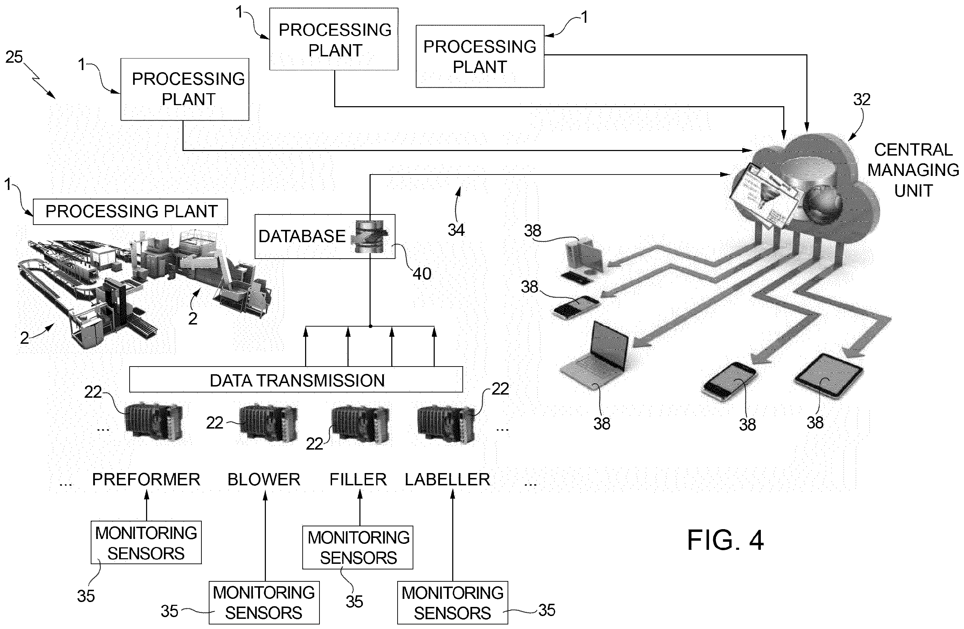

As shown in Figure 4, according to a possible embodiment of the present solution, system 25 further includes a database storage unit 40, operatively coupled to the machine control units 22 of the various processing machines 2 in each container processing plant 1, through a suitable communication network; database storage unit 40 may conveniently be located at the premises of each container processing plant 1.

Database storage unit 40 receives and stores in a suitable data structure the performance measurements received from the machine control units 22, including the KPIs, upon detection of an event.

Data stored in the database storage unit 40 may conveniently be accessible at each container processing plant 1, by the managing operators with suitable authorization; database storage unit 40 may allow execution of searches and issue reports on the stored data.

In particular, a further aspect of the present solution envisages a direct data writing process for storing the performance measurements associated to the detected anomalous events. Machine control units 22, upon detection of an event, are configured to directly push the data related to the performance measurements into the database storage unit 40.

This solution does not require any driver or software in the database storage unit 40, dedicated to polling the machine control units 22 and monitoring of the value of the acquired data, thereby increasing the speed in the data communication within the container processing plant 1 and greatly decreasing the amount of data that are communicated between machine control units 22 and the database storage unit 40. Moreover, an improved data synchronization is achieved, and a simplification of the network connection between machine control units 22 and database storage unit 40.

In this embodiment, central managing unit 32 is operatively coupled to the database storage units 40 of the various container processing plants 2 (and not directly to the machine control units 22 thereof), via the communication interface 34, in order to read the performance measurements stored therein (that again are only a subset of all the measurements performed by the same machine control units 22).

For example, a data-reading request may be issued from each database storage unit 40 to the central managing unit 32, after storing of new performance measurements; or the same central managing unit 32 may be configured to periodically read the data stored in the database storage units 40.

An first example of the managing operations of system 25 is now provided, with reference to a filler of a container processing plant 1.

In this case, KPIs that are pre-processed by the machine control units 22 may relate to operating parameters of filling valves in the filling units 20 of the filler.

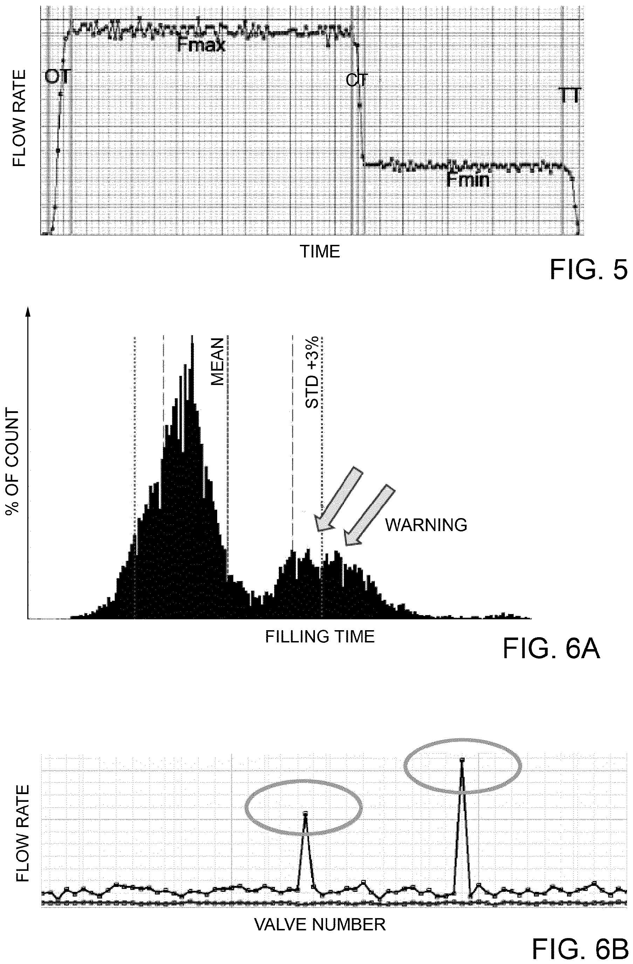

As shown in Figure 5, relating to a flow rate versus time plot of a filling valve, monitored KPIs comprise in this case: an opening time (OT) of the filling valve; a closing time (CT) of the filling valve; a total filling time (TT); a maximum flow rate (Fmax); and a minimum flow rate (Fmin).

Machine control units 22 may monitor in real-time the average and standard deviation values associated to the above performance parameters; when any of these KPIs drifts out of a predetermined range of more than a given percentage amount, e.g. 3% or 5% in standard deviation, an anomalous event is detected, indicative of a required maintenance activity, and performance measurements are stored (e.g. pushed into database storage unit 40) for further analysis by the central managing unit 32.

In this respect, Figure 6a shows an exemplary plot, indicative of a required maintenance activity on a group of filling valves, denoted with the arrows, for which the total filling time TT deviates of more than 3% from an average "normal" value.

Central managing unit 32 in this case may also and jointly evaluate the opening time OT, in order to determine if there are mechanical issues with the valve opening mechanism (e.g. a non complete opening), and/or monitor operation of related parts of the filler, which may influence the same OT performance parameter (e.g. operation of a feeding tank or a gripper); central managing unit 32 may also investigate if the operation of other processing machines, operatively coupled to the filler, may be responsible for the anomalous values of the performance parameter.

Figure 6b shows another example of a required maintenance activity, this time on a pair of valves, for which a flow rate is evidently higher than an average, normal value; also in this case, the central managing unit 32 may investigate the causes of malfunction by monitoring and comparing the various components of the filler and also other cooperating processing machines 2 in the same or in different container processing plants 1.

In general, for each filling unit 20 and each anomalous event detected, the algorithm executed by the central managing unit 32 performs analysis of the current operating situation, of the historical trend and also performs prediction of the future status, in order to determine the list of actions required for improving operation and assuring the desired product quality.

A further example of the monitoring operations of system 25 is now provided, with reference this time to a blower of a container processing plant .

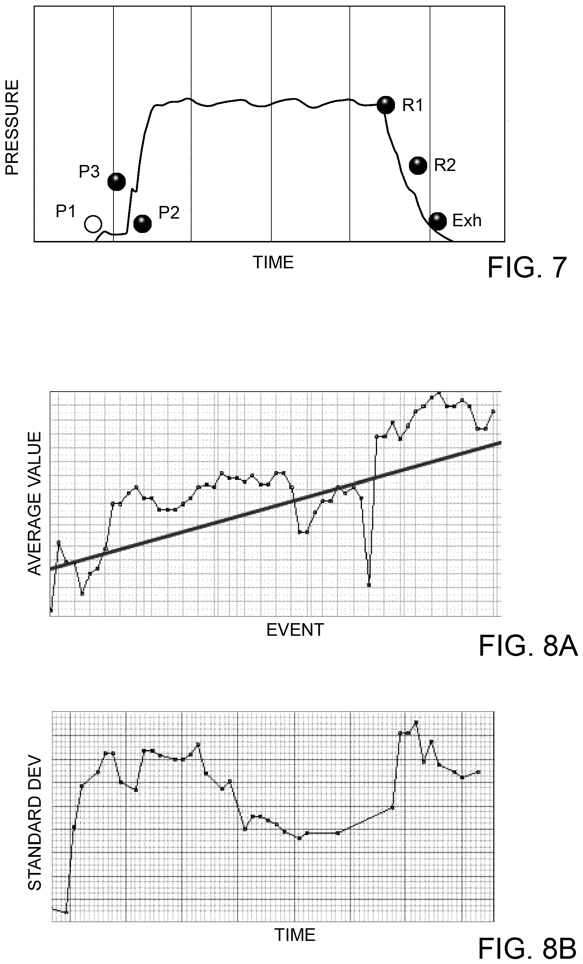

As shown in Figure 7, relating to a pressure versus time plot of a blowing mould, monitored KPIs are in this case operating points, denoted as P1, P2, P3, R1, R2, Exh, of the pressurization curve.

Figures 8a and 8b shows the average value and, respectively, the standard deviation associated to one of the above monitoring operating points (e.g. the one related to the response time of the mould). These values show a clear growth trend with time; in this case, evaluation of the historical trend allows to predict a decreased performance in the near future and planning corresponding corrective action in the action list.

Also in this case, central managing unit 32 is configured to relate the behaviour of the monitored parameter with other external parameters in the same or different processing machines 2, such as the temperature of the oven, the weight of the perform, the shape of the formed bottle, etc.

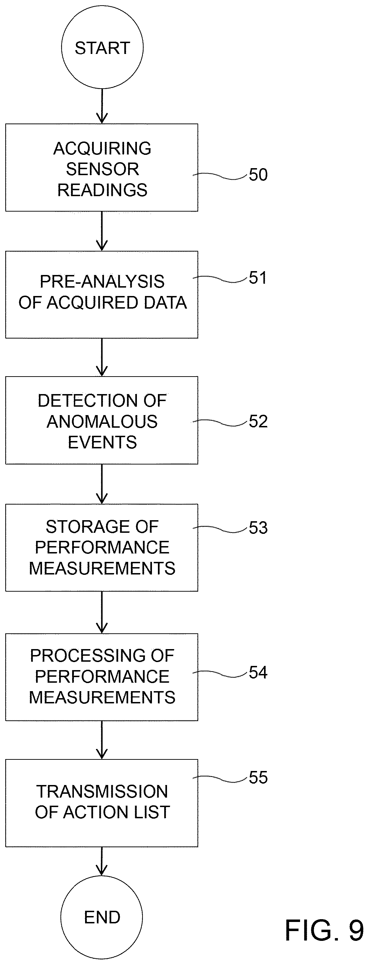

Figure 9 shows a flow chart that sums up operations performed according to a possible embodiment of the discussed method for managing product quality in container processing plants 1.

As previously discussed, at a first step 50, machine control units 22 of the processing machines 2 of the container processing plants 1 receive in real time readings from the monitoring sensors 35 coupled on-site (i.e. in the machine) to the various operating parts and components thereof, these readings being indicative of the operations performed.

Then, step 51, the same machine control units 22 perform the pre-analysis of the data acquired from the monitoring sensors 35, including the preliminary filtering operation and the determination of the performance parameters, among which the KPIs.

In particular, continuously and in real-time, the machine control units 22 monitor the values of the performance parameters and compare them with a predetermined range of value; when drifts are determined of these values outside the respective range, an anomalous event is determined, step 52, and the monitored data are stored and transmitted for their further processing.

According to a possible embodiment, data related to the performance measurements are pushed directly into database storage unit 40, for their storage and their availability for the central managing unit 32, at step 53.

The performance measurements are then processed by the central managing unit 32, at step 54, in order to determine, via an automatic analysis engine, based on comparative, historical and predictive analysis, the list of actions to be performed in order to maintain a desired level of product quality.

At step 55, the resultant list of actions is transmitted to managing operators of the container processing plant 1, for their timely intervention.

The advantages that the described solution allows to achieve are clear from the foregoing description.

In particular, it is again underlined that the proposed solution allows to monitor and proactively assure the desired quality of the products in a container processing plant during its operation, increasing efficiency and flexibility and reducing costs and wastes.

Comparative analysis of data between different processing machines in a same container processing plant 1 and/or between various container processing plants 1 on different sites, allows to share experiences and therefore to increase the efficiency of the system and in general to markedly improve the quality of the resulting products.

The discussed solution therefore assures in a automated and self-defined manner the quality of products in a container processing plant, without requiring stops of the manufacturing process or time-consuming analyses on product samples.

Finally, it is clear that modifications and variations may be applied to the solution described and shown, without departing from the scope of the appended claims.

In particular, it is underlined that, although discussed in connection with a particular solution for monitoring a container processing plant, and particularly advantageous for that application, the system and method previously disclosed are generally designed to monitor any processing plant, with a proper choice of the sensors and tools provided for the monitoring operations.

## Claims

1. An automated system (25) for managing product quality, the automated system (25) comprising:
container processing plants (1) each comprising a number of processing machines (2) including a filling machine (10) having a product tank and filling units (20) provided with valves designed to selectively couple containers (12) to the product tank and fill the containers (12) with liquid, the automated system (25) further comprising:
a number of machine control units (22), each operatively coupled to a respective processing machine (2) including said filling machine (10) to control filling times (TT) and/or flowrate, of liquid flowing through said filling unit (20), each machine control unit (22) configured to: acquire operating data including filling time (TT) and/or flowrate (Fmax, Fmin) from monitoring sensors (35) coupled to the filling machine (10); perform a pre-analysis of the acquired operating data, to determine measurements of performance parameters indicative of a performance of operations executed in the filling machine (10); monitor the performance parameter measurements, to determine an anomalous event in which said measurements drift outside a predetermined range indicative of a desired normal operating condition;
a central managing unit (32), configured to: acquire from the machine control units (22) a subset of the respective performance parameter measurements, upon determination, by the machine control units (22) of said anomalous events; process the acquired performance parameter measurements received from the various container processing plants (1) and processing machines (2) in isolation and in combination and performing analysis in relation to performance of the various processing machines (2) of a same container processing plant (1) and/or of various different container processing plants (1) in order to determine corrective actions to be performed in the processing machines (2) to maintain a desired product quality.

2. The automated system according to claim 1, wherein the performance parameters include respective Key Performance Indicators (KPI) of said filling machine (10) and
wherein the central managing unit (32) is configured to execute a predictive analysis based on the performance parameter measurements acquired from said filling machine (10) and on a historical trend of said performance parameter measurements.

3. The automated system according to claim 1, further comprising a database storage unit (40), operatively coupled to the machine control units (22) of the processing machines including the filling machine (10) in each container processing plant (1); wherein the machine control units (22), upon detection of said anomalous event, are configured to directly push data related to the performance parameter measurements into the database storage unit (40), for storage thereof; and wherein the central managing unit (32) is operatively coupled to the database storage unit (40) to acquire the subset of the respective performance parameter measurements, stored therein.

4. The automated system according to claim 3, wherein the central managing unit (32) is configured to automatically send data indicative of the corrective actions to be performed in the processing machines (2) to maintain the desired product quality of the filled containers to a number of electronic computing devices (38) of managing operators of said container processing plants (1); said electronic computing devices (38) configured to display, in response to the data received from the central managing unit (32), suitable reports and plots in association to a list of said corrective actions.

5. The automated system according to claim 1, wherein the processing machines (2) include, in addition to said filling machine (10) also a blower and/or a labeler and/or a palletizer and
wherein performance parameter measurements associated to said filling machine (10) relate to performance of a filling valve thereof and include one or more of the following: opening time (OT) of the filling valve; closing time (CT) of the filling valve; total filling time (TT); maximum flow rate value (Fmax); and minimum flow rate value (Fmin); and wherein performance parameter measurements associated to said blower relate to performance of a blowing mould and include a number of relevant points of a pressurization curve associated thereto.

## Patentansprüche

1. Automatisiertes System (25) für ein Verwalten einer Produktqualität, wobei das automatisierte System (25) umfasst:
Behälterverarbeitungsanlagen (1), von denen jede eine Anzahl von Verarbeitungsmaschinen (2) umfasst, die eine Befüllungsmaschine (10) beinhalten, die einen Produkttank und Befüllungseinheiten (20) aufweist, die mit Ventilen versehen sind, die ausgelegt sind, Behälter (12) gezielt mit dem Produkttank zu koppeln und die Behälter (12) mit Flüssigkeit zu füllen, wobei das automatisierte System (25) ferner umfasst:
eine Anzahl von Maschinensteuereinheiten (22), von denen jede mit einer jeweiligen Verarbeitungsmaschine (2) wirkgekoppelt ist, die die Befüllungsmaschine (10) beinhaltet, um Befüllungszeiten (TT) und/oder eine Durchflussrate von durch die Befüllungseinheit (20) fließender Flüssigkeit zu steuern, wobei jede Maschinensteuereinheit (22) zu Folgenden ausgestaltet ist: Erhalten von Betriebsdaten einschließlich Befüllungszeit (TT) und/oder Durchflussrate (Fmax, Fmin) von Überwachungssensoren (35), die mit der Befüllungsmaschine (10) gekoppelt sind; Durchführen einer Voranalyse der erhaltenen Betriebsdaten, um Messwerte von Leistungsparametern zu bestimmen, die indikativ für eine Leistung von in der Befüllungsmaschine (10) ausgeführten Betriebsabläufen ist; Überwachen der Leistungsparametermesswerte, um ein anomales Ereignis zu bestimmen, bei dem die Messwerte von einem vorbestimmten Bereich, der indikativ für eine erwünschte normale Betriebsbedingung ist, abweicht;
eine zentrale Verwaltungseinheit (32), die zu Folgendem ausgestaltet ist: Erhalten, von den Maschinensteuereinheiten (22), einer Teilmenge der jeweiligen Leistungsparametermesswerte, bei Bestimmung, durch die Maschinensteuereinheiten (22) der anomalen Ereignisse; Verarbeiten der erhaltenen Leistungsparametermesswerte, die von den verschiedenen Behälterverarbeitungsanlagen (1) und Verarbeitungsmaschinen (2) erhalten wurden, einzeln und in Kombination und Durchführen einer Analyse in Bezug auf eine Leistung der verschiedenen Verarbeitungsmaschinen (2) einer selben Behälterverarbeitungsanlage (1) und/oder von verschiedenen unterschiedlichen Behälterverarbeitungsanlagen (1), um Gegenmaßnahmen zu bestimmen, die bei den Verarbeitungsmaschinen (2) durchzuführen sind, um eine gewünschte Produktqualität aufrechtzuerhalten.

2. Automatisiertes System nach Anspruch 1, wobei die Leistungsparameter jeweilige Leistungskennzahlen (KPI, Key Performance Indicators) der Befüllungsmaschine (10) beinhalten und
wobei die zentrale Verwaltungseinheit (32) ausgestaltet ist, eine Vorhersageanalyse basierend auf den Leistungsparametermesswerten, die von der Befüllungsmaschine (10) erhalten wurden, und auf einem Verlaufstrend der Leistungsparametermesswerte auszuführen.

3. Automatisiertes System nach Anspruch 1, ferner umfassend eine Datenbankspeichereinheit (40), die mit den Maschinensteuereinheiten (22) der Verarbeitungsmaschinen wirkgekoppelt ist, die die Befüllungsmaschine (10) in jeder Behälterverarbeitungsanlage (1) beinhalten; wobei die Maschinensteuereinheiten (22), bei Erkennung des anomalen Ereignisses, ausgestaltet sind, Daten in Zusammenhang mit den Leistungsparametermesswerten direkt in die Datenbankspeichereinheit (40) zur Speicherung derselben zu senden; und wobei die zentrale Verwaltungseinheit (32) mit der Datenbankspeichereinheit (40) wirkgekoppelt ist, um die Teilmenge der jeweiligen Leistungsparametermesswerte, die darin gespeichert sind, zu erhalten.

4. Automatisiertes System nach Anspruch 3, wobei die zentrale Verwaltungseinheit (32) ausgestaltet ist, Daten, die indikativ für die Gegenmaßnahmen, die bei den Verarbeitungsmaschinen (2) durchzuführen sind, um die gewünschte Produktqualität der befüllten Behälter aufrechtzuerhalten, an eine Anzahl von elektronischen Rechenvorrichtungen (38) von verwaltenden Bedienern der Behälterverarbeitungsanlagen (1) automatisch zu senden; wobei die elektronischen Rechenvorrichtungen (38) ausgestaltet sind, in Reaktion auf die von der zentralen Verwaltungseinheit (32) empfangenen Daten, geeignete Berichte und Diagramme in Zusammenhang mit einer Liste der Gegenmaßnahmen anzuzeigen.

5. Automatisiertes System nach Anspruch 1, wobei die Verarbeitungsmaschinen (2), zusätzlich zu der Befüllungsmaschine (10), auch ein Gebläse und/oder einen Etikettierer und/oder einen Palettierer beinhalten und
wobei Leistungsparametermesswerte in Zusammenhang mit der Befüllungsmaschine (10) eine Leistung eines Befüllungsventils davon betreffen und eines oder mehrere von Folgendem umfassen: Öffnungszeit (OT) des Befüllungsventils; Schließzeit (CT) des Befüllungsventils; Gesamtbefüllungszeit (TT); maximaler Durchflussratenwert (Fmax); und minimaler Durchflussratenwert (Fmin); und wobei Leistungsparametermesswerte in Zusammenhang mit dem Gebläse eine Leistung einer Blasform betreffen und eine Anzahl von relevanten Punkten einer damit in Zusammenhang stehenden Druckbeaufschlagungskurve beinhalten.

## Revendications

1. Système automatisé (25) de gestion d'une qualité de produit, le système automatisé (25) comprenant :
des installations de traitement de récipients (1) comprenant chacune un nombre de machines de traitement (2) incluant une machine de remplissage (10) comportant un réservoir de produit et des unités de remplissage (20) munies de valves conçues pour, de manière sélective, coupler des récipients (12) au réservoir de produit et remplir les récipients (12) avec un liquide,
le système automatisé (25) comprenant en outre :
un nombre d'unités de contrôle de machine (22), couplées chacune de manière fonctionnelle à une machine de traitement (2) respective, incluant ladite machine de remplissage (10), pour contrôler des temps de remplissage (TT) et/ou un débit d'un liquide s'écoulant dans ladite unité de remplissage (20), chaque unité de contrôle de machine (22) étant configurée pour : acquérir des données de fonctionnement incluant un temps de remplissage (TT) et/ou un débit (Fmax, Fmin) en provenance de capteurs de surveillance (35) couplés à la machine de remplissage (10) ; réaliser une pré-analyse des données de fonctionnement acquises, pour déterminer des mesures de paramètres de performances représentatifs de performances d'opérations exécutées dans la machine de remplissage (10) ; et surveiller les mesures de paramètres de performances, pour déterminer un événement anormal dans lequel lesdites mesures sortent d'une plage prédéterminée représentative d'une condition de fonctionnement normale souhaitée ;
une unité centrale de gestion (32), configurée pour : acquérir, auprès des unités de contrôle de machine (22), un sous-ensemble des mesures de paramètres de performances respectives, à la détermination, par les unités de contrôle de machine (22), desdits événements anormaux ; traiter les mesures de paramètres de performances acquises reçues en provenance des diverses installations de traitement de récipients (1) et des diverses machines de traitement (2) isolément et en combinaison ; et réaliser une analyse en rapport avec les performances des diverses machines de traitement (2) d'une même installation de traitement de récipients (1) et/ou des diverses installations de traitement de récipients (1) différentes afin de déterminer des actions correctives à réaliser dans les machines de traitement (2) pour maintenir une qualité de produit souhaitée.

2. Système automatisé selon la revendication 1, dans lequel les paramètres de performances incluent des indicateurs clés de performances (KPI) de ladite machine de remplissage (10), et
dans lequel l'unité centrale de gestion (32) est configurée pour exécuter une analyse prédictive sur la base des mesures de paramètres de performances acquises auprès de ladite machine de remplissage (10) et d'une tendance historique desdites mesures de paramètres de performances.

3. Système automatisé selon la revendication 1, comprenant en outre une unité de stockage de base de données (40), couplée de manière fonctionnelle aux unités de contrôle de machine (22) des machines de traitement incluant la machine de remplissage (10) dans chaque installation de traitement de récipients (1),
les unités de contrôle de machine (22), à la détection dudit événement anormal, étant configurées pour déplacer directement des données relatives aux mesures de paramètres de performances dans l'unité de stockage de base de données (40) en vue de leur stockage, et
l'unité centrale de gestion (32) étant couplée de manière fonctionnelle à l'unité de stockage de base de données (40) pour acquérir le sous-ensemble des mesures de paramètres de performances respectives qui y sont stockées.

4. Système automatisé selon la revendication 3, dans lequel l'unité centrale de gestion (32) est configurée pour envoyer automatiquement des données représentatives des actions correctives à réaliser dans les machines de traitement (2) pour maintenir la qualité de produit souhaitée des récipients remplis à un nombre de dispositifs informatiques électroniques (38) de gestion d'opérateurs desdites installations de traitement de récipients (1),
lesdits dispositifs informatiques électroniques (38) étant configurés pour afficher, en réponse aux données reçues de l'unité centrale de gestion (32), des rapports et des tracés appropriés en association avec une liste desdites actions correctives.

5. Système automatisé selon la revendication 1, dans lequel les machines de traitement (2) comprennent également, en plus de ladite machine de remplissage (10), une soufflante et/ou une étiqueteuse et/ou une palettiseuse, et
dans lequel les mesures de paramètres de performances associées à ladite machine de remplissage (10) se rapportent à des performances d'une vanne de remplissage correspondante et incluent un ou plusieurs des paramètres suivants : heure d'ouverture (OT) de la vanne de remplissage ; heure de fermeture (CT) de la vanne de remplissage ; temps de remplissage total (TT) ; valeur de débit maximum (Fmax) ; et valeur de débit minimum (Fmin), et
dans lequel les mesures de paramètres de performances associées à ladite soufflante se rapportent à des performances d'un moule par soufflage et incluent un nombre de points pertinents d'une courbe de pressurisation associée auxdites performances.
